# EUROPEAN PATENT APPLICATION

(11) **EP 4 723 292 A1**
(43) Date of publication of application: **08.04.2026**
(21) Application number: 24810888.8
(22) Date of filing: 08.05.2024
(51) Int. Cl.: H01M 10/12, H01M 50/308, H01M 50/35, H01M 50/392, H01M 50/655

(54) **LEAD ACID BATTERY, AND LIQUID PLUG FOR LEAD ACID BATTERIES**

(30) Priority: 24.05.2023 JP 2023085239
(71) Applicant: GS Yuasa International Ltd., Kisshoin, Minami-ku, Kyoto-shi, Kyoto 601-8520 (JP)
(72) Inventor: YAMASHITA Hiroto, Kyoto-shi, Kyoto 601-8520 (JP); SEKIYA Kazuki, Kyoto-shi, Kyoto 601-8520 (JP)
(74) Representative: Isarpatent
(86) International application number: PCT/JP2024/017107
(87) International publication number: WO 2024/241880

(57) **Abstract**

A lead-acid battery 1 includes: a battery case 10; electrode plates 30 housed in the battery case 10; an electrolyte solution 35 housed in the battery case 10; and a vent plug 70A mounted to the battery case. The vent plug 70A includes a tubular plug body 71, a splash guard 150, and a catalytic device 100. The catalytic device 100 promotes a reaction that generates water from gas generated by charge-discharge reaction. The splash guard 150 has a holding portion positioned inside the plug body and holding the catalytic device.

## Description

The present invention relates to a lead-acid battery.

### BACKGROUND ART

A lead-acid battery, due to the charging reaction, causes the electrolyte (water) to undergo electrolysis, thereby generating oxygen gas and hydrogen gas. Therefore, an exhaust hole is provided in the upper part of the vent plug or in the lid to exhaust the oxygen gas and hydrogen gas. As a countermeasure against the decrease of the electrolyte solution accompanying electrolysis, there is a method of providing a lead-acid battery with a catalytic component that promotes recombination reaction of oxygen gas and hydrogen gas (reaction returning them to water).

In relation to the above technology, paragraph 18 of Patent Literature 1 describes: "A catalytic component for a lead-acid battery, having a catalyst layer that contains a catalyst that promotes reaction of oxygen and hydrogen to generate water or water vapor, and a configuration that allows at least part of the water or water vapor generated in the catalytic reaction to be condensed and circulated back into the lead-acid battery, and as a whole having gas permeability."

Further, paragraph 16 of Patent Literature 2 descries: "In one embodiment of the present device, a container accommodates a catalyst material in a lead-acid battery, the catalyst material including a catalyst that promotes reaction of oxygen and hydrogen to generate water or water vapor, the container having an opening covered with a membrane, the membrane allowing communication of the oxygen, the hydrogen, and the water vapor between the catalyst material and outside of the container and being oriented at an angle of 0° or more and 80° or less with respect to the gravitational direction."

### CITATION LIST

### Patent Literature

Patent Literature 1: Japanese Patent Publication No. 6576297
Patent Literature 2: Japanese Utility Model Registration Publication No. 3229214

### DISCLOSURE OF INVENTION

### PROBLEMS TO BE SOLVED BY THE INVENTION

FIG. 1 of Patent Literature 1 discloses that a catalyst layer is disposed inside a vent plug (vent filter), but does not provide any specific description regarding a method of holding the catalyst layer.

A technical problem to be solved by the present invention is to disclose a holding structure for a catalytic device with respect to a vent plug and to provide a lead-acid battery having a vent plug with a catalytic device.

### MEANS FOR SOLVING THE PROBLEMS

A lead-acid battery includes: a battery case; electrode plates housed in the battery case; an electrolyte solution housed in the battery case; and a vent plug attached to the battery case.

The vent plug includes a tubular plug body, a splash guard, and a catalytic device. The catalytic device promotes a reaction that generates water from gas generated by charge-discharge reaction. The splash guard is positioned inside the plug body and has a holding portion to hold the catalytic device.

### EFFECT OF THE INVENTION

The present technology can provide a lead-acid battery having a vent plug with a catalytic device. Since a splash guard is used to hold the catalytic device, the increase in the number of components can be suppressed when adding the catalytic device to the vent plug, even if any change to the shape of the splash guard or the like may be required.

### BRIEF DESCRIPTION OF DRAWINGS

FIG. 1 is a perspective view of a lead-acid battery.
FIG. 2 is a perspective view of a battery container.
FIG. 3 is a sectional view of the lead-acid battery (section along line A-A in FIG. 1).
FIG. 4 is a front view of a vent plug.
FIG. 5 is an enlarged view of a part of FIG. 3 (vent plug portion).
FIG. 6 is a perspective view of a partially cut-away catalytic device.
FIG. 7 is a perspective view of the catalytic device with a partial cutaway.
FIG. 8 is a perspective view of a splash guard.
FIG. 9 is a front view of the splash guard.
FIG. 10 is a side view of the splash guard.
FIG. 11 is a sectional view of the vent plug.
FIG. 12 is a sectional view of the vent plug.
FIG. 13 is a perspective view of the splash guard.
FIG. 14 is a front view of the splash guard.
FIG. 15 is a side view of the splash guard.
FIG. 16 is a sectional view of the vent plug.
FIG. 17 is a perspective view of a splash guard and a catalytic device.
FIG. 18 is a sectional view of a vent plug.
FIG. 19 is a sectional view of a vent plug.
FIG. 20 is a sectional view of a vent plug.
FIG. 21 is a sectional view of a vent plug.

### DESCRIPTION OF EMBODIMENTS

### (Overview of the Present Embodiment)

(1) A lead-acid battery according to one embodiment of the present invention includes: a battery case; electrode plates housed in the battery case; an electrolyte solution housed in the battery case; and a vent plug attached to the battery case. The vent plug includes a tubular plug body, a splash guard, and a catalytic device.

The catalytic device promotes a reaction that generates water from gas generated by charge-discharge reaction. The splash guard has a holding portion positioned inside the plug body and holding the catalytic device.

According to the lead-acid battery in (1), since the vent plug includes the catalytic device, gases generated by charge reactions can be recombined into water and returned to the battery containers. Therefore, the decrease of the electrolyte solution can be suppressed. Furthermore, since the catalytic device is held by the splash guard, which suppresses overflow of the electrolyte solution due to vibration and the like, the increase in the number of components can be suppressed when adding the catalytic device to the vent plug, even if any change to the shape of the splash guard or the like may be required.

(2) In the lead-acid battery according to the above-described (1), the catalytic device may include a tubular case having an open front surface, a catalyst layer housed in the case, and a permeable membrane covering a front surface of the catalyst layer and allowing gas to pass through. The holding portion may hold the catalytic device in a vertical orientation or in an inclined state with respect to the plug body such that a front surface of the permeable membrane forms an angle with the horizontal direction.

According to the lead-acid battery in (2), water recombined from the gas can easily return to the battery container due to the inclination of the catalytic device along the front surface of the permeable membrane.

(3) In the lead-acid battery according to the above-described (1) or (2), a plurality of the holding portions may hold a plurality of the catalytic devices.

According to the lead-acid battery in (3), by holding a plurality of catalytic devices in the vent plug, the catalytic capacity of the vent plug (i.e., gas recombination capability) is increased compared to holding only one catalytic device, and the decrease of the electrolyte solution can be further suppressed.

(4) In the lead-acid battery according to the above-described (3), a plurality of the holding portions may hold a plurality of the catalytic devices at the same height within the plug body. The configuration in (4) has an advantage that the length of the plug body in the up-down direction can be shortened.

(5) In the lead-acid battery according to any one of the above-described (1) to (4), the splash guard may include a bottom wall, a pedestal portion positioned on the bottom wall, a base wall positioned on the pedestal portion, a plurality of splash guard plates protruding laterally from the base wall, and a holding portion to hold the catalytic device. The holding portion may hold the catalytic device at a position below the splash guard plates or the bottom wall.

According to the configuration in (5), water recombined from the gas by the catalytic device is blocked from splashing upward by the splash guard plate (or bottom wall). Accordingly, when external vibrations are applied, water recombined from the gas by the catalytic device is less likely to reach the exhaust hole at the upper part of the vent plug. As a result, the electrolyte solution (water recombined from the gas) has improved resistance to overflow caused by vibration.

### <First Embodiment>

The first embodiment will be described with reference to the drawings.

### 1. Structure of lead-acid battery 1

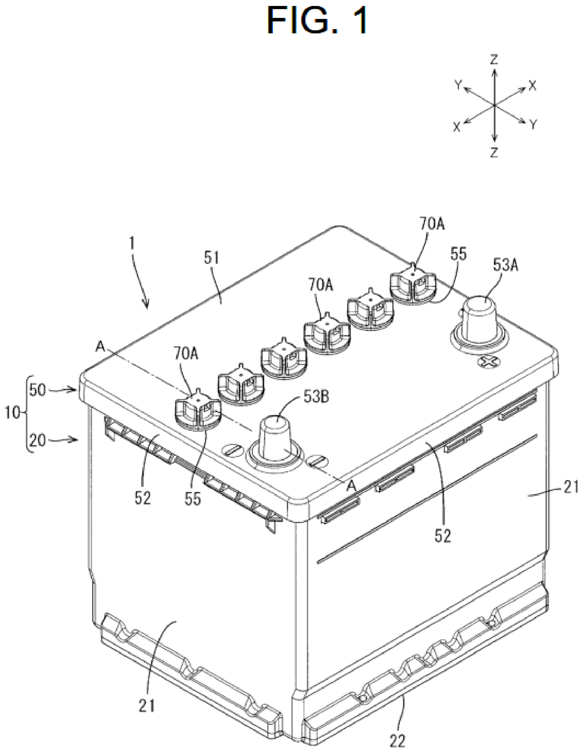

A lead-acid battery 1 is used as a power source for vehicles such as four-wheeled vehicles and two-wheeled vehicles. As illustrated in FIGs. 1 to 3, the lead-acid battery 1 includes a battery case 10, an electrode plate group 30 serving as a power generation element, and an electrolyte solution 35. In the following description, when the battery case 10 is placed horizontally without inclination with respect to an installation surface, a width direction of the battery case 10 (a direction in which external terminals 53A and 53B are arranged) is defined as X direction, an up-down direction (a height direction) of the battery case 10 is defined as a Z direction, and a depth direction is defined as Y direction.

The battery case 10 includes a battery container 20 and a lid member 50. The battery container 20 is made of a synthetic resin. The battery container 20 has four outer walls 21 and a bottom wall 22, forming a box shape with an open upper surface.

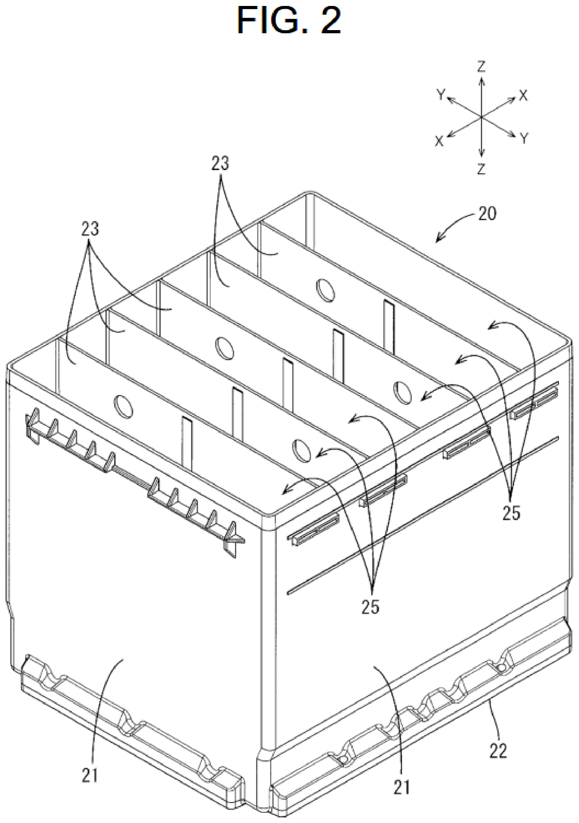

As illustrated in FIG. 2, the interior of the battery container 20 is partitioned into a plurality of cell chambers 25 by partition walls 23. The number of the cell chambers 25 provided is six, which are provided in a width direction (X direction in FIG. 2) of the battery container 20, and each cell chamber 25 accommodates an electrode plate group 30 along with an electrolyte solution 35 composed of dilute sulfuric acid.

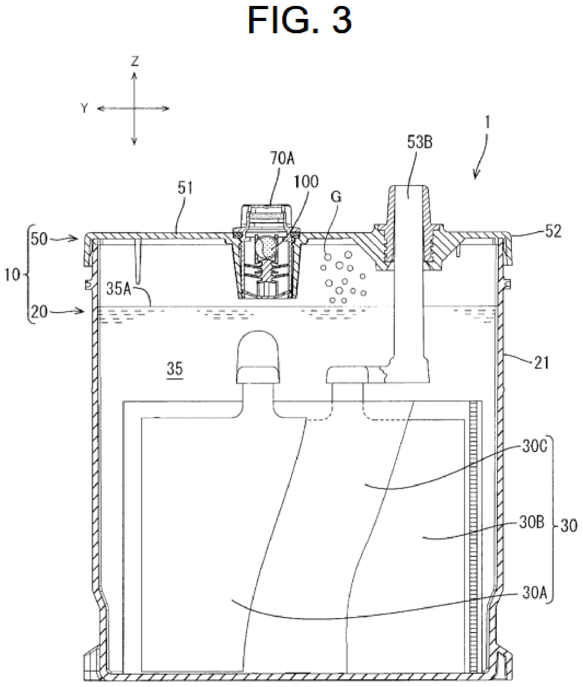

As illustrated in FIG. 3, the electrode plate group 30 is configured by a positive electrode plate 30A, a negative electrode plate 30B, and a separator 30C that separates the positive and negative electrode plates 30A and 30B. Each of the electrode plates 30A and 30B is configured by filling a grid structure with an active material.

The lid member 50 is made of synthetic resin and includes a flat plate portion 51 and an outer peripheral wall 52. The flat plate portion 51 has a size sufficient to seal the upper surface of the battery container 20. The outer peripheral wall 52 extends downward from an outer edge of the flat plate portion 51.

On a back surface of the lid member 50, lid partition walls (not illustrated) corresponding to the partition walls 23 are formed. The lid member 50 is mounted so as to overlap the battery container 20 and is thermally welded to the battery container 20. The lid member 50 seals the upper surface of the battery container 20.

The lead-acid battery 1 is provided with a positive electrode external terminal 53A and a negative electrode external terminal 53B. As illustrated in FIG. 1, the positive electrode external terminal 53A and the negative electrode external terminal 53B are arranged on both sides in the X direction of the lid member 50.

The lead-acid battery 1 further includes a vent plug 70A. The vent plug 70A is attached to a filling port 55 of the lid member 50. Six sets of filling ports 55 and vent plugs 70A are provided, corresponding to the six cell chambers 25. By removing the vent plug 70A, a replenishing liquid can be supplied from the filling port 55 to each of the cell chambers 25 of the battery container 20.

### 2. Structure of vent plug 70A

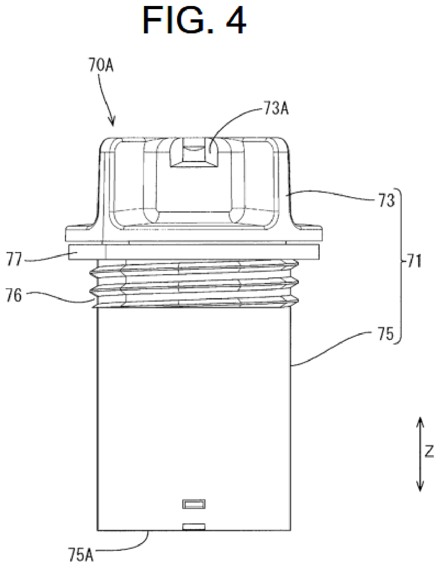

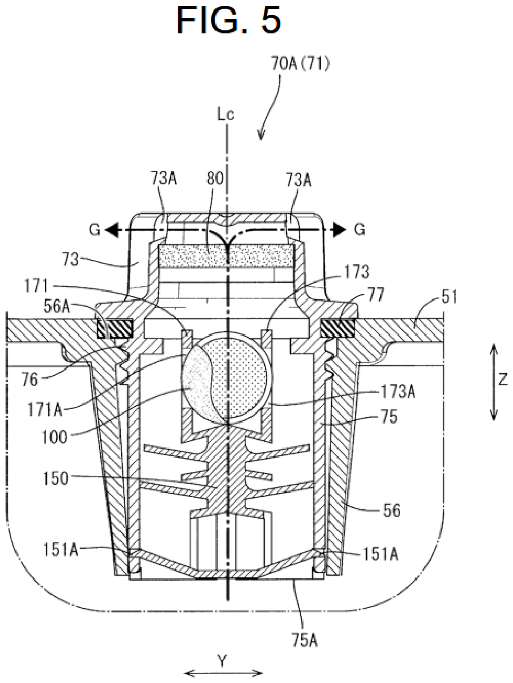

The vent plug 70A includes a plug body 71, a packing 77, a filter 80, a single catalytic device 100, and a splash guard 150, as illustrated in FIGs. 4 and 5.

The plug body 71 is, for example, made of synthetic resin and includes a circular head portion 73 and an outer peripheral wall 75. The outer peripheral wall 75 extends downward from the head portion 73 and has a substantially cylindrical shape around an axis Lc in Z direction.

The outer peripheral wall 75 is provided with a threaded portion 76 on its outer circumference. The lid member 50 is provided with an inner wall portion 56 corresponding to the filling port 55. The inner surface of the inner wall portion 56 is threaded to correspond to the threaded portion 76. The vent plug 70A is removably attached to the filling port 55 of the lid member 50 by screwing the threaded portion 76 into the inner wall portion 56 of the filling port 55.

The packing 77 is, for example, a ring-shaped member made of synthetic rubber or the like. The lower surface of the packing 77 closely contacts the stepped surface 56A of the inner wall portion 56, ensuring airtightness around the filling port.

The vent plug 70A has an opening 75A on a lower surface of the outer peripheral wall 75 and an exhaust hole 73A on the head portion 73. The opening 75A is an inlet for introducing gas G generated in the cell chamber 25 into the vent plug. The exhaust hole 73A is provided to exhaust the gas G to outside. The gas G is oxygen gas or hydrogen gas generated in the cell chamber 25 by electrolysis of water due to charging or the like.

The splash guard 150 does not close the internal space of the plug body 71 and has a gap through which gas G can move in locations other than the section illustrated in FIG. 5.

The filter 80 is positioned inside the head portion 73. The filter 80 is a sintered body of a ceramic such as alumina or a sintered body of resin particles such as polypropylene, and is a porous body.

The filter 80 is an explosion-proof filter, and suppresses entry of sparks or the like generated outside into the battery container 20.

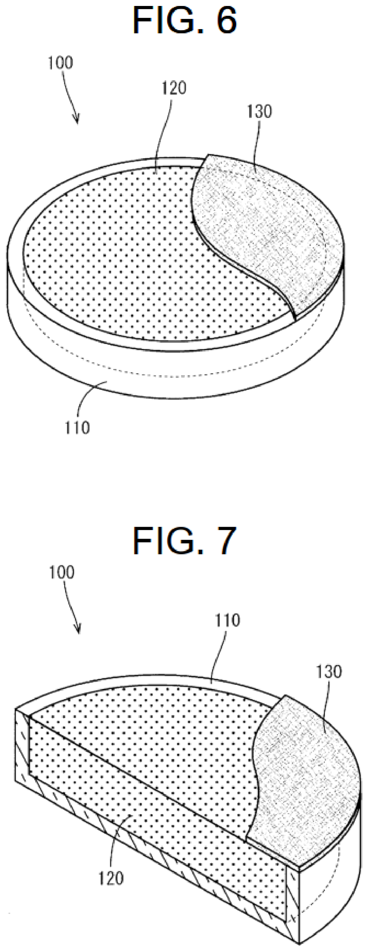

As illustrated in FIGs. 6 and 7, the catalytic device 100 is configured by a case 110, a catalyst layer 120, and a permeable membrane 130. The case 110 is made of resin and is a bottomed cylindrical shape.

The catalyst layer 120 is positioned inside the case 110. The catalyst layer 120 promotes recombination reaction of oxygen gas and hydrogen gas (reaction returning them to water).

The permeable membrane 130 is positioned on a front surface of the case **110** and covers the catalyst layer 120. The permeable membrane 130 is porous and allows oxygen gas, hydrogen gas, and water vapor to pass through. The permeable membrane 130 is preferably made of a material that does not react with the electrolyte solution inside the battery, and, as an example, porous PTFE can be used.

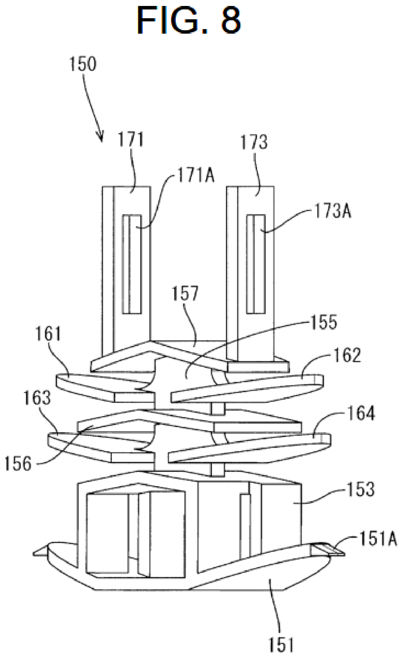

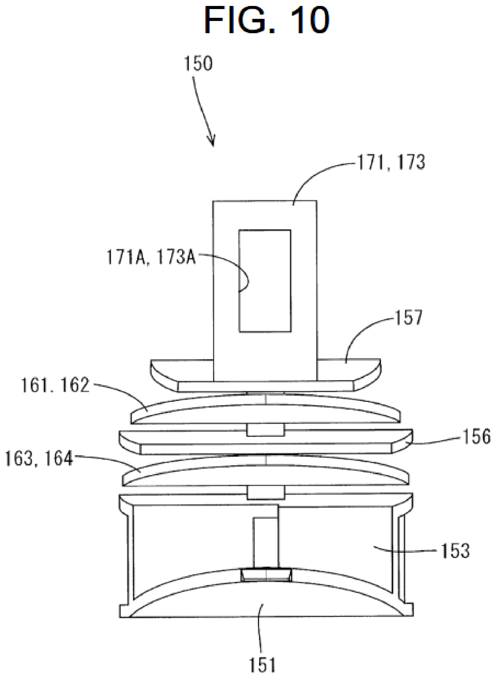

The splash guard 150 is, for example, made of resin. The splash guard 150 includes a bottom wall 151, a pedestal portion 153, a base wall 155, an intermediate wall 156, an upper wall 157, and a first splash guard plate 161 to a fourth splash guard plate 164, as illustrated in FIGs. 8 to 10. The number of splash guard plates is not limited to four, and may be, for example, one or two, or five or six. The splash guard 150 is not limited to the shape illustrated in the embodiment as long as it has a function of suppressing overflow of the electrolyte solution due to vibration.

The pedestal portion 153 is disposed on the upper surface of the bottom wall 151, and the base wall 155 is disposed on the upper surface of the pedestal portion 153. The base wall 155 has a plate shape elongated in the up-down direction. The intermediate wall 156 is provided on the halfway through the base wall 155, and the upper wall 157 is provided on the upper part of the base wall 155.

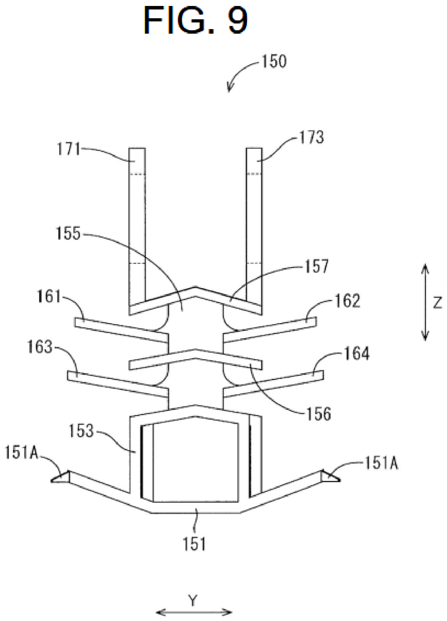

The first splash guard plate 161 and the second splash guard plate 162 are positioned between the intermediate wall 156 and the upper wall 157 and protrude from both side portions of the base wall 155 toward both lateral directions (left-right directions in FIG. 9).

The third splash guard plate 163 and the fourth splash guard plate 164 are positioned below the intermediate wall 156 and protrude from both side portions of the base wall 155 toward both lateral directions (left-right directions in FIG. 9).

The splash guard 150 is attached to the bottom portion of the plug body 71 by engaging the tip portion 151A of the bottom wall 151 with a hole in the outer peripheral wall 75, as illustrated in FIG. 5.

By having the first splash guard plate 161 to the fourth splash guard plate 164, the splash guard 150 forms a labyrinthine exhaust path for the gas G inside the plug body 71, preventing the electrolyte solution 35 from easily leaking out of the exhaust hole 73A.

The splash guard 150 further includes a first holding wall 171 and a second holding wall 173. The first holding wall 171 and the second holding wall 173 are positioned on the upper surface of the upper wall 157.

As illustrated in FIGs. 8 and 9, in the present embodiment, the first holding wall 171 and the second holding wall 173 are vertical walls along the up-down direction (Z direction) and face each other in parallel at a certain distance in the Y direction. The first holding wall 171 and the second holding wall 173 have fitting hole 171A and 173A, respectively.

The two fitting holes 171A and 173A are for fixing the catalytic device 100, and by fitting the outer periphery portion of the catalytic device 100 into the two fitting holes 171A and 173B, the catalytic device 100 is held by the first holding wall 171 and the second holding wall 173. The first holding wall 171 and the second holding wall 173 correspond to the "holding portion" of the present invention. The first holding wall 171 and the second holding wall 173 are not limited to facing each other in parallel, and may take another form, such as a V-shape or another inclined form, as long as they can hold the splash guard.

As illustrated in FIG. 5, the vent plug 70A holds the catalytic device 100 on the upper surface of the upper wall 157 by supporting the outer periphery portion of the catalytic device 100 with the two holding walls 171 and 173 of the splash guard 150.

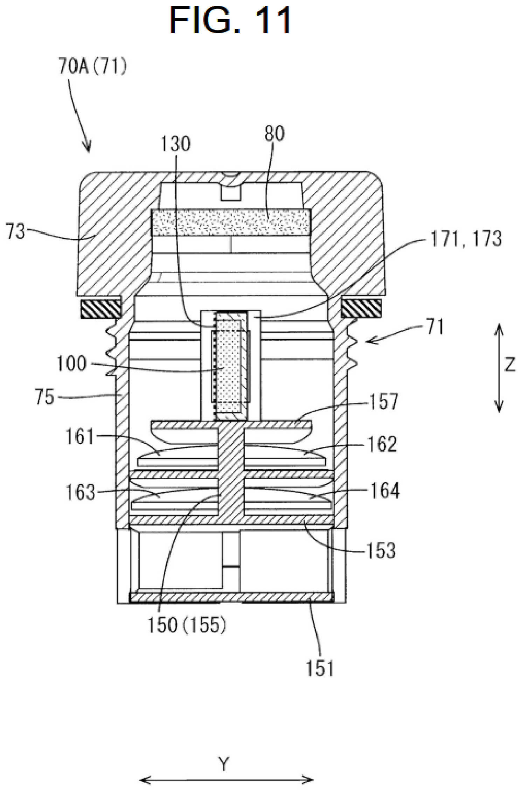

Specifically, the catalytic device 100 is held in a vertical orientation. The term "held in a vertical orientation" means that the front surface of the catalytic device 100 (the front surface of the permeable membrane 130) is held at 90 degrees to the horizontal direction (Y direction), that is, in the up-down direction (Z direction) (see FIG. 11).

### 3. Effects

According to the lead-acid battery 1 described in the first embodiment, since the vent plug 70A includes the catalytic device 100, gases generated by charge reactions and the like can be recombined into water and returned to each cell chamber 25 of the battery container 20. Therefore, the decrease of the electrolyte solution 35 can be suppressed.

Furthermore, since the catalytic device 100 is held by the splash guard 150, which suppresses overflow of the electrolyte solution due to vibration and the like, the increase in the number of components can be suppressed when adding the catalytic device to the vent plug, even if any change to the shape of the splash guard 150 or the like may be required.

Furthermore, since both sides of the catalytic device 100 are held by the two holding walls 171 and 173, there is an advantage that the catalytic device 100 can be stably held inside the plug body 71.

Furthermore, since the catalytic device 100 is mounted in a vertical orientation, water recombined from the gas G can easily move downward along the front surface of the permeable membrane 130 and does not remain on the front surface of the permeable membrane 130. Therefore, water recombined from the gas G by the catalytic device 100 can easily return to each cell chamber 25 of the battery container 20.

### <Second Embodiment>

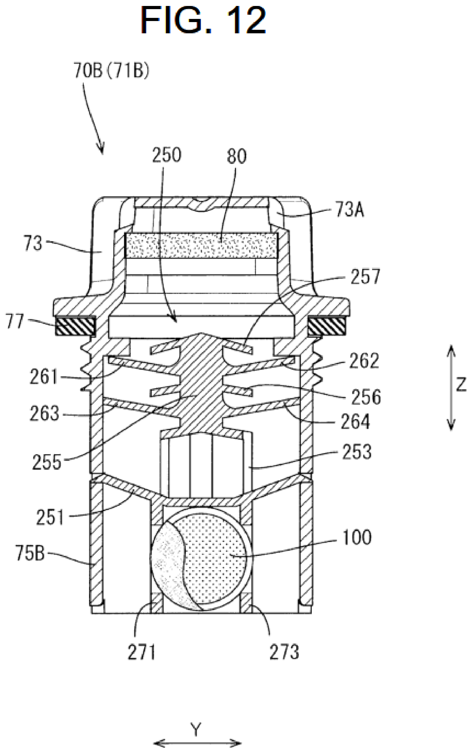

In the vent plug 70A according to the first embodiment, the catalytic device 100 is arranged on the upper part of the splash guard 150, as illustrated in FIG. 5. In the vent plug 70B according to the second embodiment, the catalytic device 100 is arranged on the lower part of the splash guard 250, as illustrated in FIG. 12.

Specifically, the splash guard 250 is provided inside the outer peripheral wall 75B of the plug body 71B, and includes a bottom wall 251, a pedestal portion 253, a base wall 255, an intermediate wall 256, an upper wall 257, and a first splash guard plate 261 to a fourth splash guard plate 264.

The splash guard 250 has a first holding wall 271 and a second holding wall 273 on the lower surface of the bottom wall 251. The first holding wall 271 and the second holding wall 273 correspond to the "holding portion" of the present invention.

The vent plug 70B holds the catalytic device 100 below the bottom wall 251 by supporting both sides of the outer periphery portion of the catalytic device 100 with the two holding walls 271 and 273 of the splash guard 250.

Specifically, the catalytic device 100 is held in a vertical orientation so that the front surface of the catalytic device 100 (the front surface of the permeable membrane 130) is at 90 degrees to the horizontal direction.

According to this configuration, as illustrated in FIG. 12, the catalytic device 100 is held at a position below the bottom wall 251. Therefore, the bottom wall 251 prevents water recombined from the gas by the catalytic device 100 from being splashed upward.

Therefore, when external vibrations are applied, water recombined from the gas by the catalytic device 100 is less likely to reach the exhaust hole 73A at the upper part of the vent plug. As a result, the electrolyte solution (water recombined from the gas) has improved resistance to overflow caused by vibration.

### <Third Embodiment>

The vent plug 70A according to the first embodiment holds the catalytic device 100 by using the holding walls 171 and 173 of the splash guard 150. In the vent plug 70C according to the third embodiment, the holding structure of the catalytic device 100 is different, and the catalytic device 100 is held by using the slits 354A and 354B of the splash guard 350.

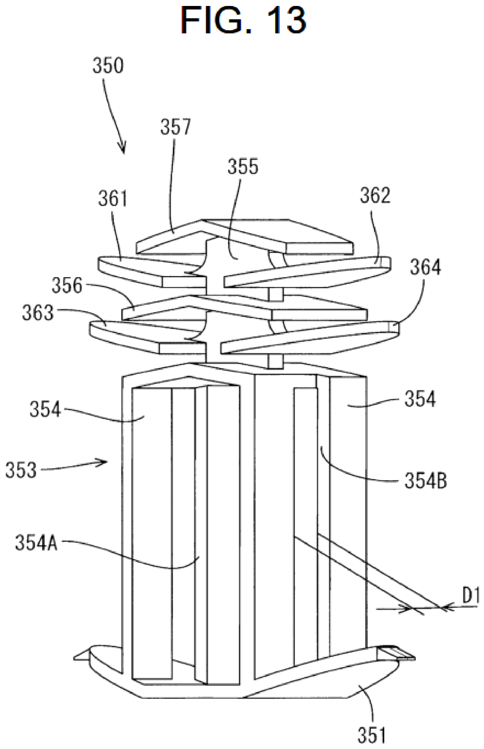

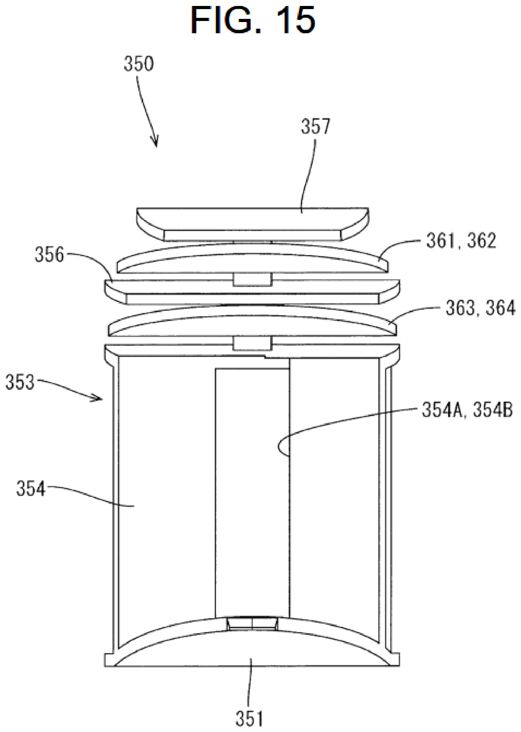

Specifically, the splash guard 350, as illustrated in FIGs. 13 to 15, includes a bottom wall 351, a pedestal portion 353, a base wall 355, an intermediate wall 356, an upper wall 357, and a first splash guard plate 361 to a fourth splash guard plate 364.

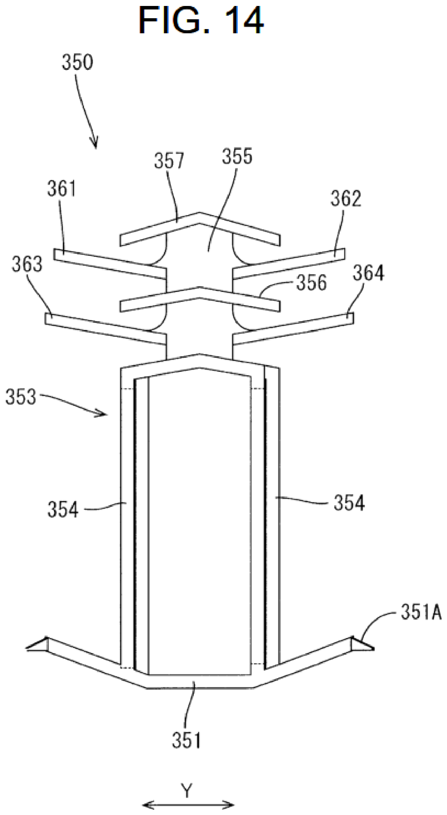

The pedestal portion 353 is disposed on the upper surface of the bottom wall 351, and the base wall 355 is disposed on the upper surface of the pedestal portion 353. The pedestal portion 353 penetrates through in the direction perpendicular to the sheet of FIG. 14 and has a hollow interior. The base wall 355 has a plate shape elongated in the up-down direction. The intermediate wall 356 is provided on the halfway through the base wall 355, and the upper wall 357 is provided on the upper part of the base wall 355.

The first splash guard plate 361 and the second splash guard plate 362 are positioned between the intermediate wall 356 and the upper wall 357, and protrude from both side portions of the base wall 355 toward both lateral directions (left-right direction).

The third splash guard plate 363 and the fourth splash guard plate 364 are positioned below the intermediate wall 356, and protrude from both side portions of the base wall 355 toward both lateral directions (left-right direction).

The splash guard 350 has slits 354A and 354B. The slits 354A and 354B are provided on the left and right side walls 354 of the pedestal portion 353, respectively.

The slits 354A and 354B have a shape elongated in the up-down direction (Z direction), and their lower ends reach the bottom wall 351. The width D1 of the slits 354A and 354B corresponds to the thickness of the catalytic devices 100A and 100B, allowing the catalytic devices 100A and 100B to be inserted.

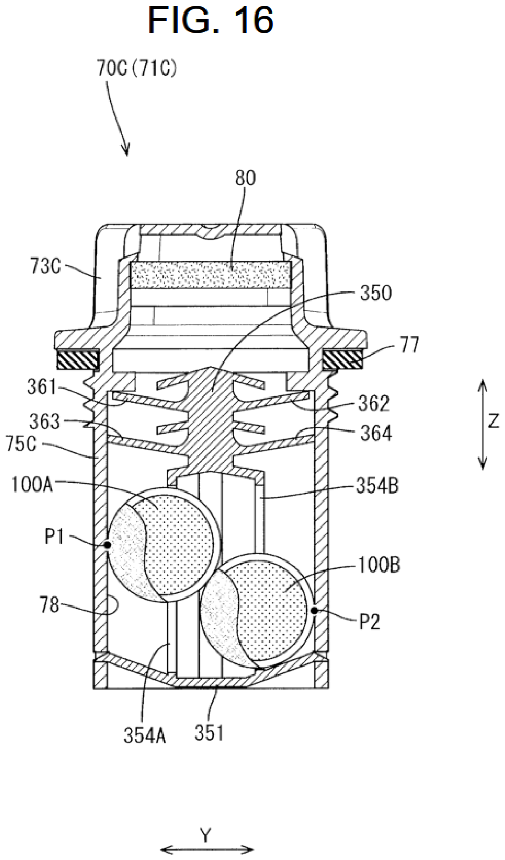

As illustrated in FIG. 16, the vent plug 70C includes two catalytic devices 100A and 100B. The two catalytic devices 100A and 100B penetrate through the left and right slits 354A and 354B of the splash guard 350. The positions of the two catalytic devices 100A and 100B in the up-down direction (Z direction) are offset. In the present embodiment, the catalytic device 100A located on the left in FIG. 16 is positioned above, and the catalytic device 100B located on the right is positioned below.

The vent plug 70C holds the catalytic devices 100A and 100B inside the plug body 71C by clamping them with the slits 354A and 354B of the splash guard 350. The slits 354A and 354B correspond to the "holding portion" of the present invention.

In FIG. 16, reference numeral 73C denotes the head portion of the plug body 71C, and reference numeral 75C denotes the outer peripheral wall of the plug body 71C. In the catalytic devices 100A and 100B in FIG. 16, points P1 and P2 on their outer peripheral surfaces contact with the inner surfaces 78 of the outer peripheral wall 75C of the plug body 71C, respectively. The catalytic devices 100A and 100B do not necessarily have to contact the inner surfaces 78 of the outer peripheral wall 75C, and a gap may exist between them. The catalytic devices may contact each other or may be spaced apart.

According to this configuration, as illustrated in FIG. 16, the catalytic device 100 is held at a position below the splash guard plates 361 to 364. Therefore, the splash guard plates 361 to 364 prevent water recombined from the gas by the catalytic device 100 from being splashed upward.

Therefore, when external vibrations are applied, water recombined from the gas by the catalytic device 100 is less likely to reach the exhaust hole 73A at the upper part of the vent plug. As a result, the electrolyte solution (water recombined from the gas) has improved resistance to overflow caused by vibration.

### <Fourth Embodiment>

The vent plug 70C according to the third embodiment holds the catalytic device 100 by using the slit 354. In the vent plug 70D according to the fourth embodiment, the holding structure of the catalytic device 100 is different, and the catalytic device 100 is held by using two splash guard plates 463 and 464.

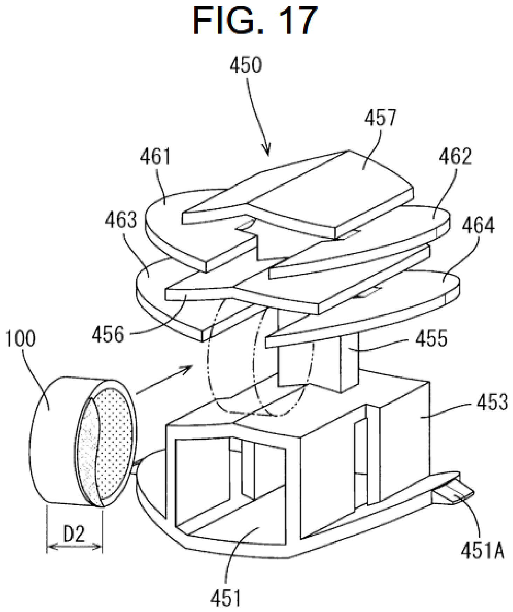

Specifically, the splash guard 450, as illustrated in FIG. 17, includes a bottom wall 451, a pedestal portion 453, a base wall 455, an intermediate wall 456, an upper wall 457, and a first splash guard plate 461 to a fourth splash guard plate 464.

The pedestal portion 453 is disposed on the upper surface of the bottom wall 451, and the base wall 455 is disposed on the upper surface of the pedestal portion 453. The base wall 455 has a plate shape elongated in the up-down direction (Z direction). The intermediate wall 456 is provided on the halfway through the base wall 455, and the upper wall 457 is provided on the upper part of the base wall 455.

The first splash guard plate 461 and the second splash guard plate 462 are positioned between the intermediate wall 456 and the upper wall 457, and protrude from both side portions of the base wall 455 toward both lateral directions (left-right direction).

The third splash guard plate 463 and the fourth splash guard plate 464 are positioned below the intermediate wall 456, and protrude from both side portions of the base wall 455 toward both lateral directions (left-right direction).

The distance between the third splash guard plate 463 and the fourth splash guard plate 464 corresponds to the thickness D2 of the catalytic device 100, and, as illustrated in FIG. 17, the catalytic device 100 can be inserted into the space between the third splash guard plate 463 and the fourth splash guard plate 464.

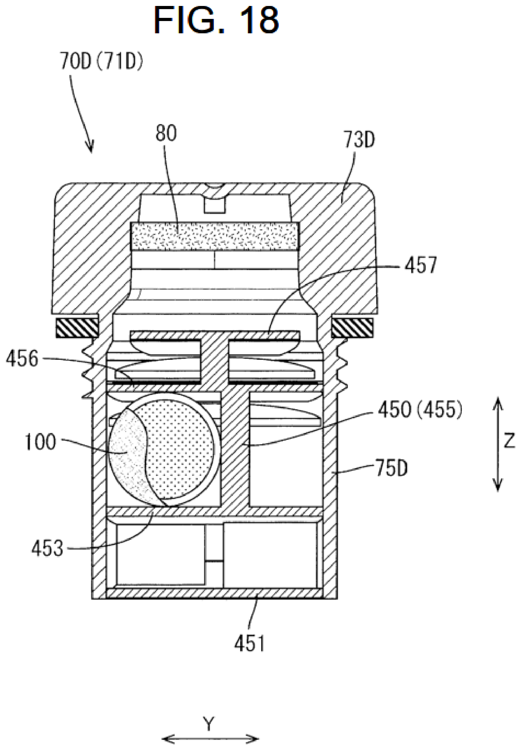

As illustrated in FIG. 17, the vent plug 70D holds the catalytic device 100 inside the plug body 71D, as illustrated in FIG. 18, by clamping it with the two splash guard plates 463 and 464. Reference numeral 73D denotes the head portion of the plug body 71D, and reference numeral 75D denotes the outer peripheral wall of the plug body 71D. The two splash guard plates 463 and 464 correspond to the "holding portion" of the present invention.

The catalytic device 100 is configured such that its both sides in the width direction are clamped by the two splash guard plates 463 and 464, while its position in the up-down direction (Z direction) is regulated by the upper surface of the pedestal portion 453 and the lower surface of the intermediate wall 456.

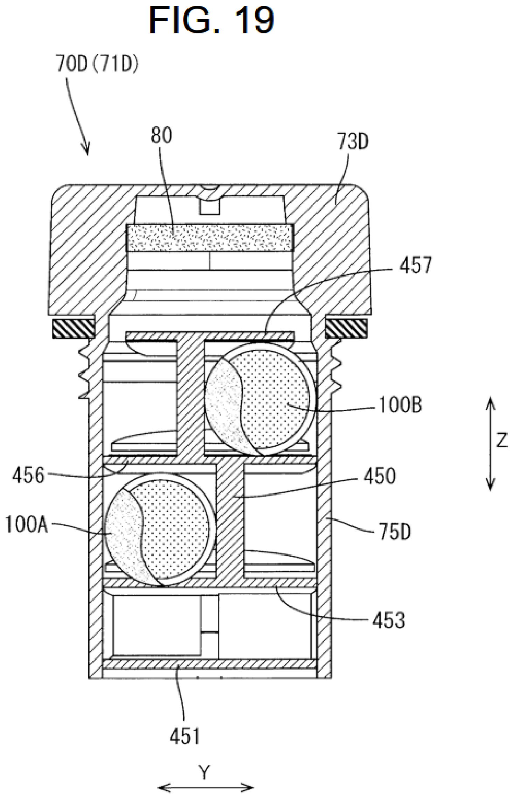

In the example illustrated in FIG. 18, one catalytic device 100 is held, but as illustrated in FIG. 19, in addition to the third splash guard plate 463 and the fourth splash guard plate 464, the first splash guard plate 461 and the second splash guard plate 462 can be used to hold two catalytic devices 100 vertically.

In the example of FIG. 19, the catalytic device 100A is configured such that its both sides in the width direction are clamped by the two splash guard plates 463 and 464, while its position in the up-down direction is regulated by the upper surface of the pedestal portion 453 and the lower surface of the intermediate wall 456. The catalytic device 100B is configured such that its both sides in the width direction are clamped by the two splash guard plates 461 and 462, while its position in the up-down direction is regulated by the upper surface of the intermediate wall 456 and the lower surface of the upper wall 457.

### <Other Embodiments>

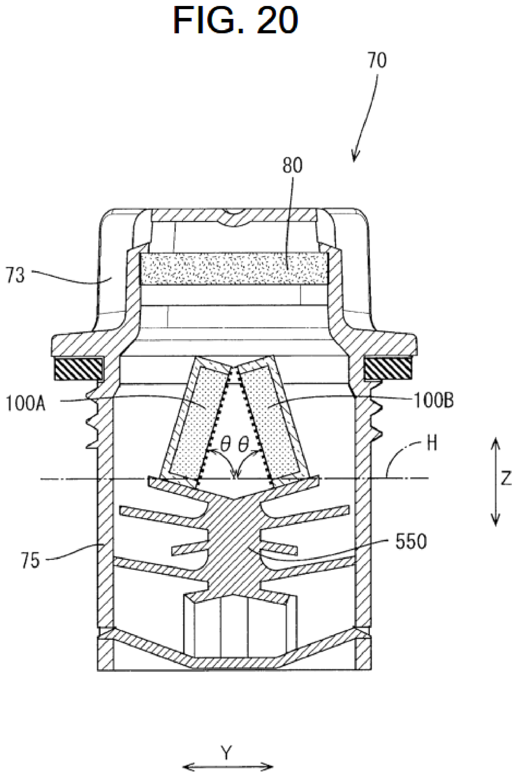

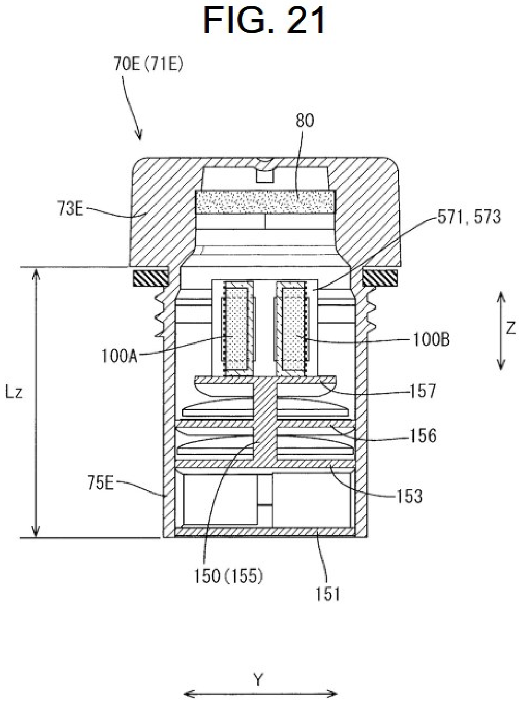

The present invention is not limited to the embodiments described above and illustrated in the drawings. For example, the following embodiments are also included within the technical scope of the present invention.
(1) In the first embodiment, the lead-acid battery 1 is intended for use in four-wheeled vehicles and two-wheeled vehicles, however, the application is not limited to the examples of the embodiments. The lead-acid battery may also have an arrangement of the cell chambers 25 different from that disclosed in the first embodiment. For example, there may be a matrix arrangement such as three rows in the depth direction by two columns in the lateral direction. A lead-acid battery having such a matrix arrangement may be used in large vehicles such as buses. The present invention can also be applied to a lead-acid battery in which the cell chambers 25 are arranged in a matrix.
(2) In the first embodiment, as one example of the vent plug 70A, a configuration was illustrated in which the head portion 73 protrudes from the upper surface of the lid member 50, and the head portion 73 is attached and detached by being rotated with fingers. However, the shape of the vent plug 70A is not limited to the configuration according to the first embodiment. For example, the vent plug 70 may have a configuration in which the head portion 73 does not protrude from the upper surface of the lid member 50, and the head portion 73 is attached and detached by inserting a coin into a groove, such as a cross-shaped or other shape, formed in the head portion 73. The same applies to the vent plugs 70B to 70D.
(3) In the first to fourth embodiments, a configuration is described in which the catalytic device 100 is housed vertically in the vent plug 70. As illustrated in FIG. 20, the catalytic device 100 may also be arranged with respect to the vent plug 70 in an inclined state. The inclined state refers to a state in which the angle of the front surface of the catalytic device 100 (the front surface of the permeable membranes 130) with respect to the horizontal line H is greater than 0 degrees and less than 180 degrees (0 < θ < 180).
(4) In the first embodiment, as illustrated in FIG. 11, one catalytic device 100 is held by using the holding walls 171 and 173. Just as in the vent plug 70E illustrated in FIG. 21, two catalytic devices 100A and 100B may be held by using holding walls 571 and 573. Furthermore, the two catalytic devices 100A and 100B may be held at the same height in the up-down direction (Z direction). In FIG. 21, reference numeral 71E denotes the plug body of the vent plug 70E, reference numeral 73E denotes the head portion of the plug body 71E, and reference numeral 75E denotes the outer peripheral wall of the plug body 71E. By holding the two catalytic devices 100A and 100B at the same height, the length Lz of the outer peripheral wall 75E of the plug body 71E can be shortened. Here, "the same height" means that, for the two catalytic devices, the positions of both the upper ends and the lower ends are aligned in the up-down direction.

By shortening the length Lz of the outer peripheral wall 75E, it becomes possible to secure the distance from the liquid level 35A to the vent plug 70E, so that even if the liquid level 35A rises due to charging or the like, the liquid level 35A is less likely to reach the vent plug 70E. By suppressing the liquid level 35A from reaching the vent plug 70E, the electrolyte solution 35 is prevented from adhering to the catalytic device 100, thereby suppressing a decrease in the performance of the catalytic device 100.

### DESCRIPTION OF REFERENCE NUMERALS

1 Lead-acid battery
10 Battery case
20 Battery container
30A, 30B Electrode plates
50 Lid member
70A to 70E Vent plug
71 Plug body
80 Filter
100 Catalytic device
110 Case
120 Catalyst layer
130 Permeable membrane
150, 350, 450 Splash guard

## Claims

1. A lead-acid battery comprising:
a battery case;
electrode plates housed in the battery case;
an electrolyte solution housed in the battery case; and
a vent plug mounted to the battery case, wherein
the vent plug includes a tubular plug body, a splash guard, and a catalytic device,
the catalytic device promotes a reaction that generates water from gas generated by charge-discharge reaction, and
the splash guard has a holding portion positioned inside the plug body and holding the catalytic device.

2. The lead-acid battery according to claim 1, wherein
the catalytic device includes a tubular case having an open front surface, a catalyst layer housed in the case, and a permeable membrane covering a front surface of the catalyst layer and allowing gas to pass through, and
the holding portion holds the catalytic device in a vertical orientation or in an inclined state with respect to the plug body such that a front surface of the permeable membrane forms an angle with a horizontal direction.

3. The lead-acid battery according to claim 1 or 2, wherein
a plurality of the holding portions hold a plurality of the catalytic devices.

4. The lead-acid battery according to claim 3, wherein
a plurality of the holding portions hold a plurality of the catalytic devices at a same height within the plug body.

5. The lead-acid battery according to claim 1 or 2, wherein
the splash guard includes a bottom wall, a pedestal portion positioned on the bottom wall, a base wall positioned on the pedestal portion, a plurality of splash guard plates protruding laterally from the base wall, and a holding portion to hold the catalytic device, and
the holding portion holds the catalytic device at a position below the splash guard plates or the bottom wall.

6. A vent plug for a lead-acid battery, comprising:
a tubular plug body;
a splash guard; and
a catalytic device, wherein
the catalytic device promotes a reaction that generates water from gas produced by charge-discharge reaction, and
the splash guard has a holding portion positioned inside the plug body and holding the catalytic device.
